# EUROPEAN PATENT APPLICATION

(11) **EP 4 481 315 A1**
(43) Date of publication of application: **25.12.2024**
(21) Application number: 23180751.2
(22) Date of filing: 21.06.2023
(51) Int. Cl.: F28F 9/00, H01M 10/613, H01M 10/625, H01M 50/102, H01M 50/147, H01M 50/167, H05K 7/20, F28D 21/00

(54) **A THERMAL MANAGEMENT SYSTEM**

(71) Applicant: VALEO SYSTEMES THERMIQUES, 78320 Le Mesnil Saint-Denis (FR)
(72) Inventor: SUS, Pawel, 96476 Bad Rodach (DE); GENGER, Michael, 96476 Bad Rodach (DE)
(74) Representative: Valeo Systèmes Thermiques

(57) **Abstract**

A thermal management system (100) for electrical components generating heat during operation includes a thermal regulation device (10), a casing (20) and a sealing element (30). The thermal regulation device (10) cools the electrical components and includes a base plate (12) and a channel plate (14). The base plate (12) supports the electrical components thereon. The channel plate (14) abutting the base plate (12) is formed with channels (14b) to define fluid flow passages between the base plate (12) and the channel plate (14). The casing (20) at least partially encapsulates the electrical components supported on the thermal regulation device (10). The sealing element (30) is disposed between the thermal regulation device (10) and the casing (20). At least one of the thermal regulation device (10) and the casing (20) includes corresponding connection means that configure crimping connection between the thermal regulation device (10) and the casing (20).

## Description

### TECHNICAL FIELD

The present invention relates to a thermal management system for electrical components generating heating during operation, particularly, the present invention relates to battery thermal management system.

### BACKGROUND

Generally, in a conventional thermal management system, particularly, a battery thermal management system includes a thermal regulation device, for example, a battery cooler, a casing and a sealing element. The battery cooler is for cooling the batteries that generate heat during the operation. The battery cooler includes a base plate and a channel plate. The base plate supports the electrical components to be cooled, for example, the battery thereon. The channel plate is disposed abutting the base plate and formed with channels to define fluid flow passages between the base plate and the channel plate. The casing at least partially encapsulates the batteries supported on the battery cooler to protect the batteries against dust, moisture and external environment that is detrimental for the batteries. The sealing element is disposed between the casing and its cover to provide air tight sealing between the casing and its cover.

Generally, the battery cooler is connected to a battery casing by means of screws, however, such arrangement is expensive and renders the assembly between the battery cooler and the battery casing inconvenient and time consuming. Further, proper mounting of the battery casing over the battery cooler is critical to ensure efficient heat dissipation from the battery. Improved surface contact between the battery cooler and the battery casing is required for improved heat dissipation from the batteries held in the battery casing. Further, the battery cooler is a delicate component that has to withstand highpressure fluid flow there-through. The forming of holes therein for the passages of the screws for configuring screw connection between the battery cooler and the battery casing may cause stress concentration and leakage issues. The stress concentration may lead to mechanical failure of the battery cooler. The leakage through the battery cooler can detrimentally impact efficiency and performance of the battery cooler. Further, leak-proof connection between the battery cooler and the battery casing is required.

Accordingly, there is a need for a battery thermal management system that ensures a robust, inexpensive, quick and secure connection between the battery cooler and the battery casing. Further, there is a need for a battery cooler that ensures improved surface contact between the battery cooler and the battery casing for improved heat dissipation from the batteries held in the battery casing. Furthermore, there is a need for a battery thermal management system that prevents mechanical failure of the battery cooler and prevents leakage through the battery cooler. Still further, there is a need for battery thermal management system that ensures leak-proof connection between the battery cooler and the battery casing.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

### SUMMARY

A thermal management system for electrical components generating heat during operation is disclosed in accordance with an embodiment of the present invention. The thermal management system includes a thermal regulation device, a casing and a sealing element. The thermal regulation device cools the electrical components and includes a base plate and a channel plate. The base plate supports the electrical components thereon. The channel plate is abutting the base plate and is formed with channels to define fluid flow passages between the base plate and the channel plate. The casing at least partially encapsulates the electrical components supported on the thermal regulation device. The sealing element is disposed between the thermal regulation device and the casing. At least one of the thermal regulation device and the casing includes corresponding connection means that configure crimping connection between the thermal regulation device and the casing.

Generally, the connection means is at least one of tabs, clips, hook and barb.

Particularly, the connection means are tabs formed on the thermal regulation device.

More specifically, the base plate is configured with connection means that are crimped over the casing.

Further, the casing is formed with at least one of ribs, slots and profiled structure that engage with the connection means formed on the thermal regulation device.

Alternatively, the connection means are configured on the casing and crimped over the thermal regulation device.

Further, the thermal regulation device is formed with at least one of ribs, slots and profiled structure that engage with the connection means formed on the casing.

Generally, the casing includes at least one side cooperating with the thermal regulation device.

Further, the casing includes a reinforcement element extending from a first wall to a second wall opposite to the first wall.

Specifically, the casing includes a closed side abutting against the thermal regulation device.

Alternatively, the casing includes an open side aligned with the thermal regulation device with the sealing element disposed between the thermal regulation device and the open side of the casing.

In accordance with an embodiment of the present invention, the channel plate is configured with connection means that are crimped over the casing with the base plate and the sealing element disposed between the channel plate and the casing.

Particularly, the sealing element is disposed between the base plate and the channel plate.

Alternatively, the sealing element is disposed between the base plate and the casing.

In accordance with an embodiment of the present invention, the thermal regulation device is adapted to be crimped to at least one of the side panels, a top side and a bottom side of the casing, else the thermal regulation device acts as at least one of the side panels, the top panel and the bottom panel for the casing.

Generally, the thermal management system is for cooling of a plurality of electrical components generating heat during operation, the components being battery cells or battery modules.

### BRIEF DESCRIPTION

Other characteristics, details and advantages of the invention can be inferred from the description of the invention hereunder. A more complete appreciation of the invention and many of the attendant advantages will be readily obtained as the same becomes better understood by reference to the following detailed description when considered in connection with the accompanying figures, wherein:
FIG. 1 illustrates an isometric view of a battery thermal management system in accordance with an embodiment of the present invention;
FIG. 2 illustrates an exploded view of the battery thermal management system of FIG. 1;
FIG. 3 illustrates an enlarged isometric view of a portion of the battery thermal management system of FIG. 1 depicting crimping connection between a battery cooler and a casing in accordance with one embodiment;
FIG. 4 illustrates a sectional view depicting the crimping connection of FIG. 3;
FIG. 5 illustrates a schematic representation of a battery thermal management system, wherein a crimping connection is configured between battery cooler and bottom closed side of casing in accordance with another embodiment;
FIG. 6 illustrates a schematic representation of a battery thermal management system in accordance with another embodiment, wherein the battery cooler directly crimped to a bottom open side of the casing directly supports the batteries thereon;
FIG. 7 illustrates a schematic representation of a battery thermal management system in accordance with yet another embodiment, wherein the battery cooler directly crimped to top open side of the casing acts as a top panel for the casing;
FIG. 8 - FIG. 10 illustrate isometric views of portions of a battery thermal management system in accordance with different embodiments depicting crimping connections of different types between the battery cooler and the battery casing;
FIG. 11 illustrates a schematic representation depicting crimping connection between a battery thermal management system and a casing, wherein the crimping tabs are extending from the channel plate;
FIG. 12 illustrates a schematic representation depicting crimping connection between a battery thermal management system and a casing, wherein the connection means is extending from the casing.

### DETAILED DESCRIPTION

It must be noted that the figures disclose the invention in a detailed enough way to be implemented, said figures helping to better define the invention if needs be. The invention should however not be limited to the embodiment disclosed in the description.

Although, the present invention is explained in the forthcoming disclosure and accompanying drawings with example of battery thermal management system for battery cooling in vehicles, wherein battery cooler and casing are crimped for configuring connection there-between, however, the present invention is also application to any thermal management system applicable in vehicular and non-vehicular applications, wherein it is required to configure robust, inexpensive, quick and secure connection between a heat exchanger and other component such as casing of the thermal management system.

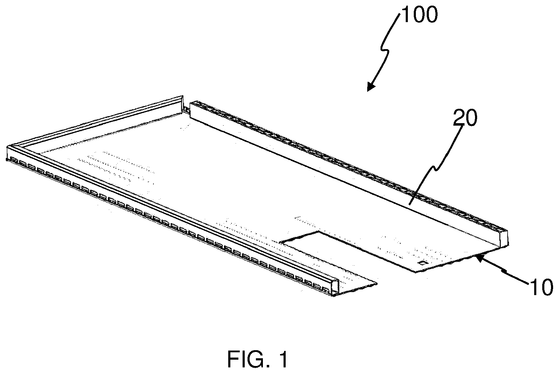

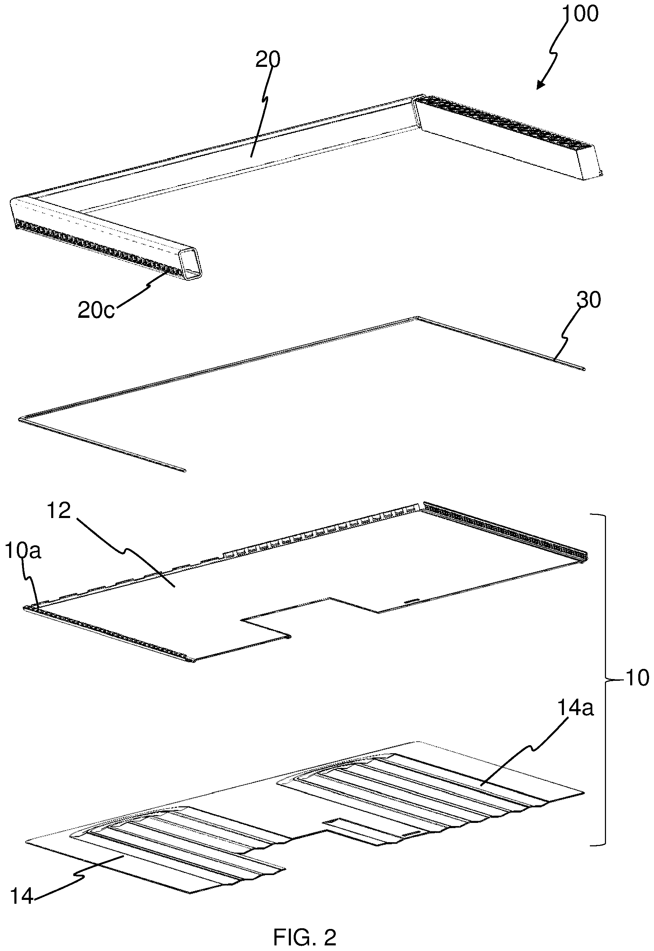

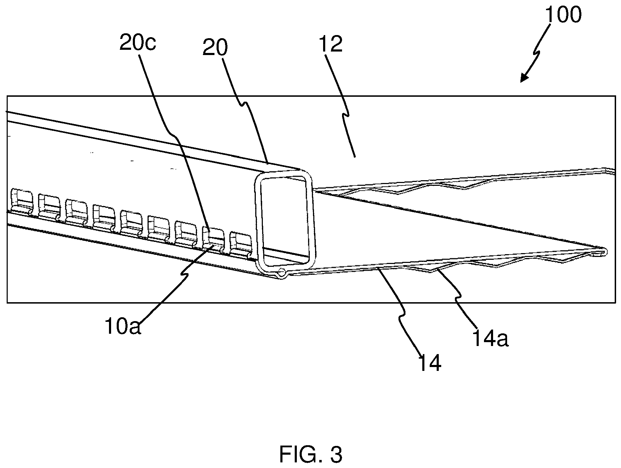

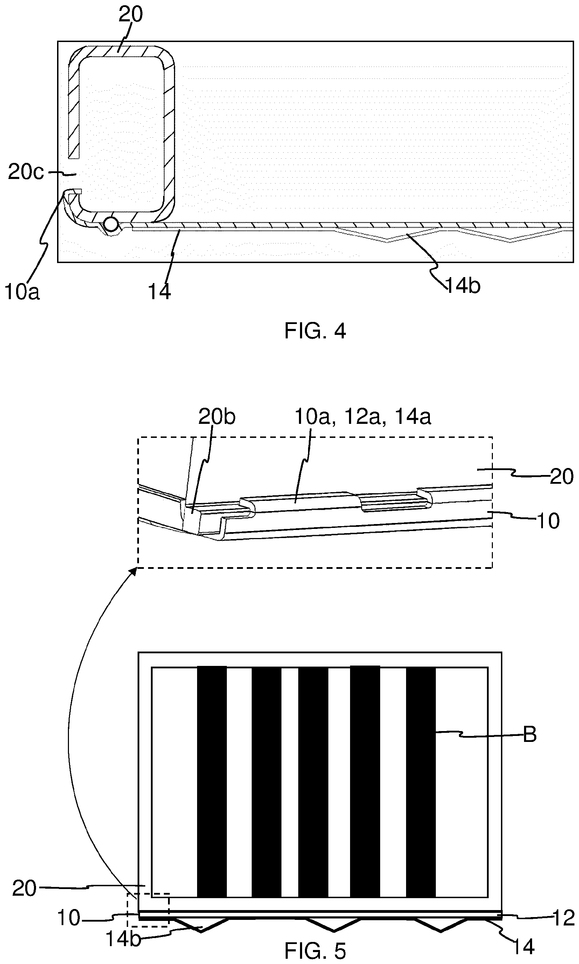

FIG. 1 illustrates a battery thermal management system 100 in accordance with an embodiment of the present invention. FIG. 2 illustrates an exploded view of the battery thermal management system 100. The battery thermal management system 100 is for cooling of the electrical components generating heat during operation, particularly, for the cooling of the batteries in vehicle, particularly, electric or hybrid vehicle. The battery thermal management system 100 includes a thermal regulation device 10, a casing 20 and a sealing element 30. The thermal management system 100 of the present invention further includes connection means 10a, 20a formed on at least one of the thermal regulation device 10 and the casing 20 for forming crimping connection there-between as illustrated in FIG. 3 and FIG. 4.

The thermal regulation device 10, particularly, battery cooler and hereinafter referred to as battery cooler 10 cools the batteries and includes a base plate 12 and a channel plate 14. The battery cooler 10 includes an inlet and an outlet for ingress and egress of a heat exchange fluid, particularly, a coolant with respect to the battery cooler 10. The base plate 12 can be formed of different materials using diverse manufacturing processes, in one example, the base plate 12 is of metal and formed by stamping operation. The base plate 12 supports the batteries thereon. The channel plate 14 is abutting the base plate 12 and is formed with a plurality of channels 14b to define fluid flow passages between the base plate 12 and the channel plate 14. The channel plate 14 can be formed of different materials using diverse manufacturing processes, in one example, the channel plate 14 is of metal and formed by stamping operation. In another example, the channel plate 14 is of plastic material manufactured by injection process. The inlet and the outlet of the battery cooler 10 are in fluid communication with each other via the fluid flow passages formed between the base plate 12 and the channel plate 14. The coolant entering the battery cooler 10 through the inlet flows through fluid flow passages and in the process extracts heat from the batteries supported on the base plate 12 to ensure efficient operation of the batteries by preventing damage to the batteries due to over-heating. The coolant after flowing through the heat flow passages and after extracting heat from the batteries egresses from the battery cooler through the outlet.

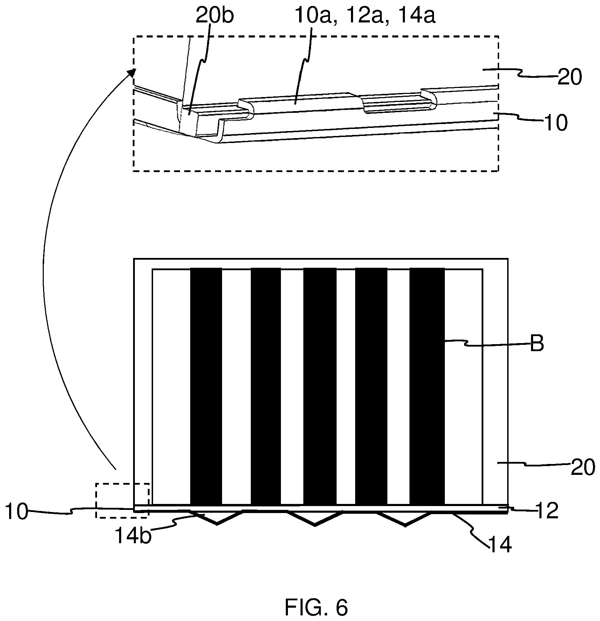

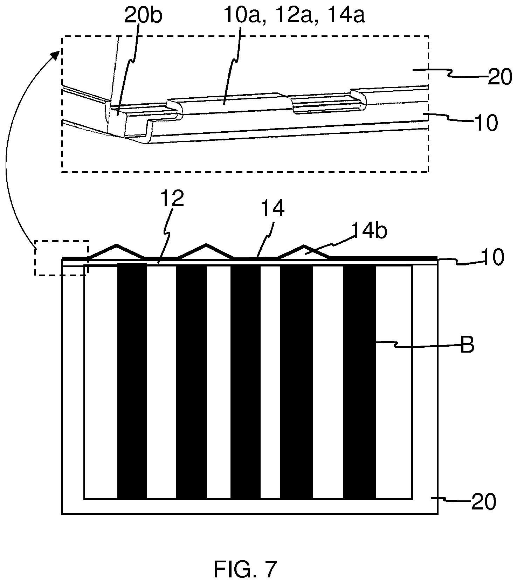

The casing 20 at least partially encapsulates the batteries supported on the battery cooler 10. The casing 10 is formed by joining angles of rectangular or L-shaped cross-section or trusses of different configurations. The casing 20 can be formed of different materials using diverse manufacturing processes, in one embodiment, the casing is of metal and is an extruded component. In accordance with an embodiment, the casing 20 can be battery pack or a battery module. The casing 20 arranges the batteries to be cooled with respect to the battery cooler 10. The casing 20 positions, urges and maintains the batteries to be cooled against the battery cooler 10 for efficient heat dissipation from the batteries. The casing 20 protects the batteries against dust, moisture and harmful external environment that is detrimental for the batteries. Generally, the casing 20 includes at least one side cooperating with the battery cooler 10. Further, the casing 20 includes a reinforcement element extending from a first wall to a second wall opposite to the first wall to withstand stresses and securely hold the batteries together. Specifically, the casing 20 includes a closed side abutting against the battery cooler 10 and crimped to the battery cooler 10 as illustrated in FIG. 5. Alternatively, the casing 20 includes an open side aligned with the battery cooler 10 with the sealing element 30 disposed between the battery cooler 10 and the open side of the casing 20. In accordance with one embodiment, the battery cooler 10 is crimped to the bottom side of the casing 20 as illustrated in FIG. 6. Particularly, the battery cooler 10 directly crimped to a bottom open side of the casing 10 directly supports the batteries thereon. In accordance with an embodiment of the present invention, the battery cooler 10 is crimped to a top side of the casing 20 and the battery cooler 10 acts as a top panel for the casing 20 as illustrated in FIG. 7. In accordance with one embodiment of the present invention, the thermal regulation device is either crimped to one of the side panels, a top side and a bottom side of the casing or the thermal regulation device acts as at least one of the side panels, the top panel and the bottom panel of the casing. However, the present invention is not limited to any particular configuration in which the battery cooler is secured to the battery casing, whether connected to bottom open or closed side or top open side, as far as the battery cooler crimped to the casing and is directly or indirectly in contact with the batteries received in the battery casing for extracting heat from the batteries.

The sealing element 30 is disposed between the battery cooler 10 and the casing 20 to protects batteries from external environment, for example, moisture and dust.

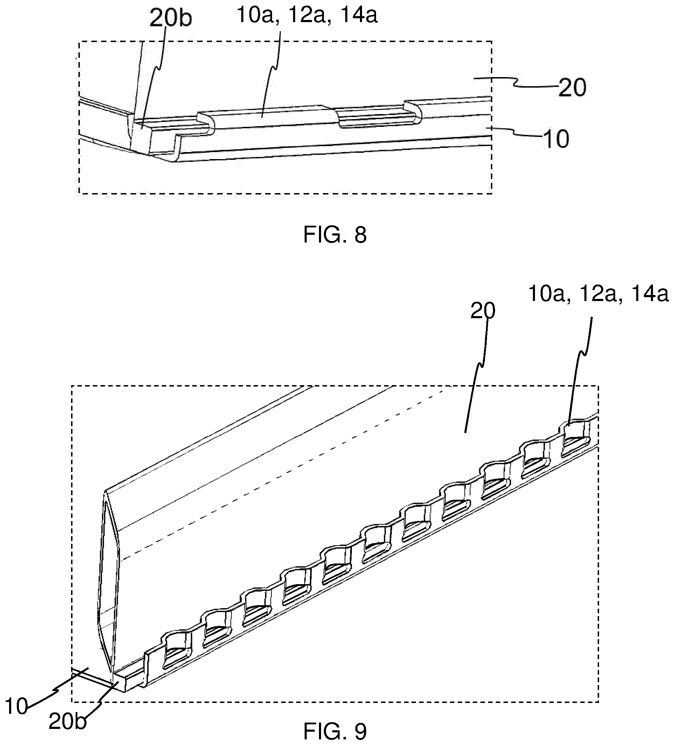

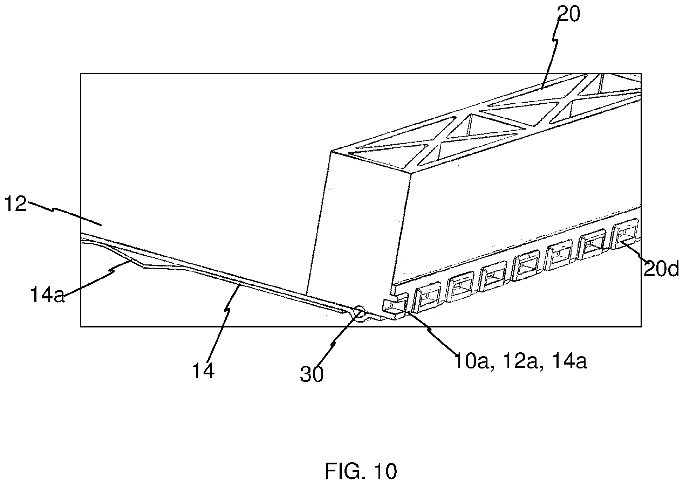

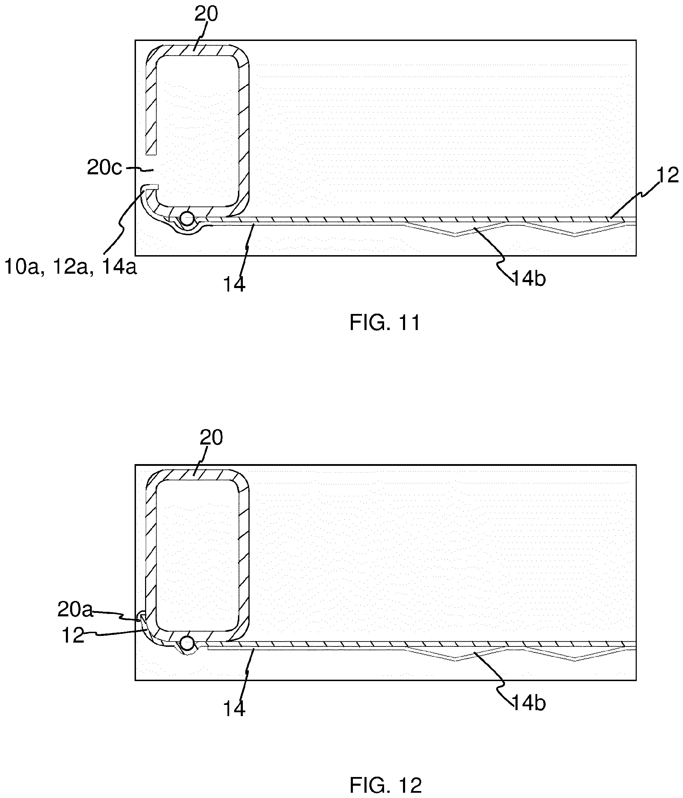

At least one of the battery cooler 10 and the casing 20 includes corresponding connection means 10a and 20a that configure crimping connection between the battery cooler 10 and the casing 20. Generally, the connection means 10a, 20a is at least one of tabs, clips, hook and barb. Particularly, the connection means 10a are tabs formed on the battery cooler 10. More specifically, the base plate 12 is configured with connection means 10a, particularly, tabs 12a that are crimped over the casing 20. Further, the casing 20 is formed with at least one of ribs 20b, slots 20c and any other profiled structure 20d integrally formed on the casing 20, the profiled structure 20d is adapted to receive and / or engage with the connection means 10a in the form of tabs formed on the battery cooler 10. The profiled structure can be of any cross section, either of a closed cross section or an open cross section. In accordance with another embodiment, the slots 20c are formed on the casing wall and receive and engage with the tabs extending from the battery cooler 10 as illustrated in FIG. 3 and FIG. 4. In yet another embodiment, the ribs 20b extend from the casing wall and the connection means extending from the battery cooler 10 engage with the ribs 20b as illustrated in FIG. 8 and FIG. 9. In accordance with another embodiment of the present invention, the profiled structure 20d extend from the casing wall and the connection means extending from the battery cooler 10 engage with the profiled structure 20d as illustrated in FIG. 10. FIG. 10 illustrates the casing 20 with profiled structure 20d extending therefrom in accordance with an embodiment of the present invention and adapted to engage with the tabs 12a extending from the base plate 12 to configure crimping connection between the base plate 12 and the casing 20. FIG. 3 illustrates an enlarged view depicting crimping connection between the battery cooler 10 and the casing 20, particularly, crimping connection between the base plate 12 and the slots 20c formed on the casing 20, wherein tabs extending from the base plate 12 are crimped in the slots 20c formed on the casing 20. In accordance with another embodiment as illustrated in FIG.11, the channel plate 14 comprising connection means 10a in the form of tabs 14a adapted to be crimped over the casing 20 with the base plate 12 and the sealing element 30 disposed between the channel plate 14 and the casing 20.

Alternatively, the connection means in the form of tabs 20a are configured on the casing 20 and crimped over the battery cooler 10 as illustrated in FIG. 12. Further, the battery cooler 10 is formed with at least one of ribs, slots and profiled structure that engage with the tabs 20a formed on the casing 20. In accordance with another embodiment, few of the tabs are configured on the battery cooler that engages with the corresponding ribs, slots and profiled structure formed on the casing, while remaining tabs are formed on the casing that engage with the corresponding ribs, slots and profiled structure formed on the battery cooler. FIG. 8 - FIG. 10 illustrate isometric views of portions of the battery thermal management system 100 in accordance with different embodiments depicting connection means of different types for configuring crimping connection between the battery cooler 10 and the battery casing 20. Referring to FIG. 8, the connection means are in the form of tabs formed on the battery cooler 10 that are crimped over rib 20b extending from the battery casing 20. Referring to the FIG. 9, the connection means are in the form of deformable portions between spaced apart tabs, the deformable portions are deformed to be crimped over rib 20b extending from the battery casing 20. Referring to FIG. 10, the connection means are in the form of deformable ribs with slots formed thereon to receive tubular extensions extending from the casing 20 for configuring crimping connection between the battery cooler 10 and the battery casing 20. The complementary elements configured on the battery cooler 10 and the battery casing 20 can be of any configuration as far as these engage with each other to configure crimping connection between the battery cooler 10 and the battery casing 20. Particularly, the present invention is not limited to number, position and configuration of the connection means, particularly, the tabs and the corresponding ribs, slots and profiled structure forming the crimping connection and whether the tabs are formed on the battery cooler 10 or the casing 20, and whether the corresponding ribs, slots and profiled structure engaging with the tabs are formed on the battery cooler 10 or the casing 20, as far as the complementary crimping elements forms a robust, inexpensive, quick and secure crimping connection between the battery cooler and the battery casing.. The crimping connection between the battery cooler and the casing forms robust, inexpensive, quick and secure connection between the battery cooler and the battery casing.

Generally, the base plate and the channel plate of the battery cooler are connected to each other. However, the present invention is not limited to a particular connection between the base plate and the channel plate of the battery cooler 10 and the base plate 12 and the channel plate can be joined by any other method such as brazing. In accordance with an embodiment of the present invention, the sealing element 30 disposed between the channel plate 14 and the casing 20. Alternatively, the sealing element 30 is disposed between the base plate 12 and the casing 20 as illustrated in FIG. 10. However, the present invention is not limited configuration of sealing element disposed between the battery cooler and the battery casing, particularly, whether sealing element is disposed between the base plate and the casing or whether the sealing element is disposed between the channel plate and the casing as far as the sealing element protects the batteries held inside the casing against external environment, for example, moisture .

Generally, the thermal management system is for cooling of a plurality of electrical components disposed inside a vehicle and generating heat during operation, the components being battery cells or battery modules.

In any case, the invention cannot and should not be limited to the embodiments specifically described in this document, as other embodiments might exist. The invention shall spread to any equivalent means and any technically operating combination of means.

## Claims

1. A thermal management system (100) for electrical components generating heat during operation, the thermal management system (100) comprising:
• a thermal regulation device (10) adapted to cool the electrical components, the thermal regulation device (10) comprising:
∘ a base plate (12) adapted to support the electrical components thereon; and
∘ a channel plate (14) abutting the base plate (12) and formed with channels (14b) adapted to define fluid flow passages between the base plate (12) and the channel plate (14),
• a casing (20) adapted to at least partially encapsulate the electrical components supported on the thermal regulation device (10),
• a sealing element (30) disposed between the thermal regulation device (10) and the casing (20),
**characterized in that** at least one of the thermal regulation device (10) and the casing (20) comprises corresponding connection means (10a, 20a) adapted to form crimping connection between the thermal regulation device (10) and the casing (20), the sealing element (30) being configured to be maintained between said thermal regulation device (10) and the casing (20) once they are connected.

2. The thermal management system (100) as claimed in the previous claim, wherein the connection means (10a, 20a) is at least one of tabs, clips, hook and barb.

3. The thermal management system (100) as claimed in the previous claim, wherein the connection means (10a) are formed on the thermal regulation device (10) are, notably tabs.

4. The thermal management system (100) as claimed in any of the preceding claims, wherein the base plate (12) comprises connection means (12a) adapted to be crimped over the casing (20).

5. The thermal management system (100) as claimed in any of the preceding claims, wherein the casing (20) is formed with at least one of ribs (20b), slots (20c) and profiled structure (20d) adapted to engage with the connection means (10a) formed on the thermal regulation device (10).

6. The thermal management system (100) as claimed in any of the claims 1 to 2, wherein the connection means (20a) are formed on the casing (20) and are adapted to be crimped over the thermal regulation device (10).

7. The thermal management system (100) as claimed in the preceding claim, wherein the thermal regulation device (10) is formed with at least one of ribs, slots and profiled structure adapted to engage with the connection means (20a) formed on the casing (20).

8. The thermal management system (100) as claimed in any of the preceding claims, the casing (20) comprises at least one side cooperating with the thermal regulation device (10).

9. The thermal management system (100) as claimed in any of the preceding claims, wherein the casing (20) comprises a closed side abutting against the thermal regulation device (10).

10. The thermal management system (100) as claimed in claim 8, wherein the casing (20) comprises an open side aligned with the thermal regulation device (10) with the sealing element (30) disposed between the thermal regulation device (10) and the open side of the casing (20).

11. The thermal management system (100) as claimed in any of the preceding claims, wherein the channel plate (14) comprising connection means (14a) adapted to be crimped over the casing (20) with the base plate and the sealing element (30) disposed between the channel plate (14) and the casing (20).

12. The thermal management system (100) as claimed in any of the preceding claims, wherein the sealing element (30) is disposed between the base plate (12) and the casing (20).

13. The thermal management system (100) as claimed in claim 8 or claim 9, wherein the thermal regulation device (10) is adapted to be crimped to at least one of side panels, a top side and a bottom side of the casing (20), else the thermal regulation device (10) acts as one of the side panels, the top panel and the bottom panel for the casing (20).

14. The thermal management system (100) as claimed in any of the claims 1 to 15, wherein the thermal regulation device (10) is adapted to be crimped to the bottom side of the casing (20).
